# EUROPEAN PATENT SPECIFICATION

(11) **EP 4 220 041 B1**
(45) Date of publication and mention of the grant of the patent: **15.10.2025**
(21) Application number: 22212070.1
(22) Date of filing: 19.04.2017
(51) Int. Cl.: F25B 43/04, F25B 45/00

(54) **PURGE SYSTEM FOR CHILLER SYSTEM**
ENTLÜFTUNGSSYSTEM FÜR KÜHLERSYSTEM
SYSTÈME DE PURGE POUR SYSTÈME DE REFROIDISSEUR

(30) Priority: 19.04.2016 US 201662324667 P
(43) Date of publication of application: 02.08.2023
(62) Divisional of application: 17723175.0
(73) Proprietor: Carrier Corporation, Farmington, CT 06032 (US)
(72) Inventor: MA, Zidu, Farmington 06032 (US); RYDKIN, Ivan, Syracuse 13221 (US); CLOUGH, Warren, Syracuse 13221 (US)
(74) Representative: Dehns

(56) References cited:
- US-A- 4 842 621
- US-A- 4 984 431
- US-A- 5 515 690

## Description

### BACKGROUND

Embodiments relate generally to chiller systems used in air conditioning systems, and more particularly to a purge system for removing non-condensables from a chiller system.

Low pressure chiller systems may include sections that operate below atmospheric pressure. As a result, leaks in the chiller system may draw non-condensables, such as air into the system, contaminating the refrigerant. This non-condensable degrades the performance of the chiller system. To address this problem, existing low pressure chillers include a purge unit to remove non-condensables. For typical purge systems, there are usually two steps in the process, a condensing step and a residual collection step. The condensing step can be an air cooled condenser or a condenser cooled by another vapor compression cycle, i.e. another independent refrigeration system. The residual collection step usually involves an adsorption medium (such as activated carbon) to collect the refrigerant residual to cut down the amount of refrigerant released to the atmosphere. The adsorption medium can be either regenerated onboard the purge system or be regenerated offline. Onboard regeneration has a better recovery of refrigerant than offline regeneration, but state of the art purge systems with onboard regeneration of the adsorption medium cannot achieve a refrigerant release to ambient lower than that with offline regeneration.

US 5,515,690 discloses a purge supplement including a vessel attached to a gas discharge line of a purge system. Adsorbent material is disposed within the vessel for adsorbing refrigerant. The purge supplement is equipped with a heater to periodically heat the adsorbent material. The purge system senses when the adsorbent material has adsorbed a certain amount of refrigerant. In particular US5515690 shows a purge system for removing non-condensables from a chiller system, the purge system comprising:a purge chamber; a plurality of carbon beds fluidly connected to the purge chamber into which a flow of refrigerant and non-condensables is selectably directed from the purge chamber to remove the non-condensables therefrom; a vent line fluidly connected to the plurality of carbon beds to dispose of the collected non-condensables;a heater operably connected to the plurality of carbon beds to selectably heat one or more of the carbon beds of the plurality of carbon beds to release refrigerant therefrom and direct the released refrigerant to the purge chamber, wherein the system includes a sensor to detect presence of refrigerant in the vent line.

### SUMMARY

In one embodiment, a purge system for removing non-condensables from a chiller system includes a purge chamber, a plurality of carbon beds fluidly connected to the purge chamber into which a flow of refrigerant and non-condensables is selectably directed from the purge chamber to remove the non-condensables therefrom. A vent line is fluidly connected to the plurality of carbon beds to dispose of the collected non-condensables, and a heater is operably connected to the plurality of carbon beds to selectably heat one or more of the carbon beds of the plurality of carbon beds to release refrigerant therefrom and direct the released refrigerant to the purge chamber. A sensor is included to detect presence of refrigerant in the went line and the sensor is positioned along a fluid path between a first carbon bed of the plurality of carbon beds and a second carbon bed of the plurality of carbon beds. When the sensor detects the presence of refrigerant, flow is moved from the first carbon bed through the second carbon bed and to the purge chamber.

Additionally, in this or other embodiments the plurality of carbon beds are arranged in a fluidly parallel arrangement.

Additionally, in this or other embodiments a heater is operably connected to a carbon bed of the plurality of carbon beds.

Additionally, in this or other embodiments the plurality of carbon beds are arranged in a fluidly serial arrangement.

Additionally, in this or other embodiments a sensor is configured to detect presence of refrigerant in the vent line.

Additionally, in this or other embodiments a pumping element urges flow from the purge chamber to the plurality of carbon beds.

Additionally, in this or other embodiments the pumping element is one of a compressor or a vacuum pump.

Additionally, in this or other embodiments a purge chamber outlet selectably directs refrigerant from the purge chamber to the chiller system.

These and other advantages and features will become more apparent from the following description taken in conjunction with the drawings.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic view of a chiller system;
FIG. 2 is a schematic view of a purge system for a chiller system, which is outside of the scope of the claims; and
FIG. 3 is a schematic of a purge system for a chiller system according to the invention.

The detailed description explains embodiments, together with advantages and features, by way of example with reference to the drawings.

### DETAILED DESCRIPTION

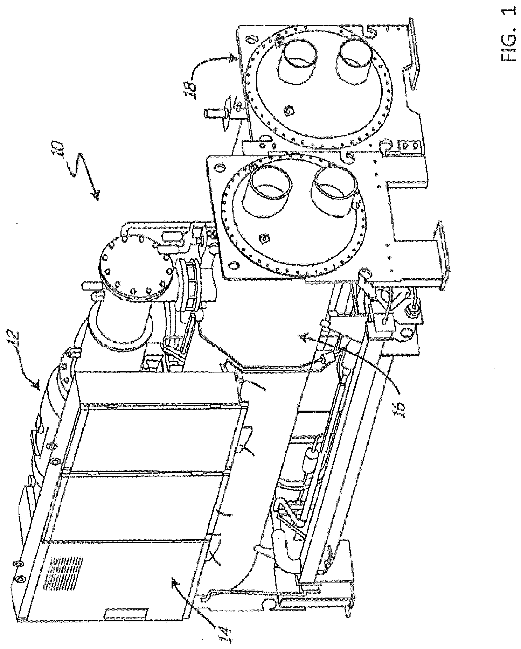

FIG. 1 depicts a chiller system 10 in an exemplary embodiment. Chiller system 10 is a screw chiller, but embodiments of the invention are appropriate for use with other compression chiller assemblies, such as, for example, a centrifugal chiller. As shown in FIG. 1, chiller system 10 includes compressor 12, variable frequency drive 14, condenser 16 and cooler 18.

In operation, gaseous refrigerant is induced into compressor 12 and compressed. Compressor 12 is driven by a motor under the control of variable frequency drive 14. Variable frequency drive 14 controls the frequency of the alternating current (AC) supplied to the motor thereby controlling the speed of the motor and the output of compressor 12. After the refrigerant is compressed, the high temperature, high pressure refrigerant gas is supplied to condenser 16. In condenser 16, the gaseous refrigerant condenses into liquid as it gives up heat. The condensed liquid refrigerant then flows into cooler 18, which circulates chilled water. The low pressure environment in cooler 18 causes the refrigerant to change states to a gas and, as it does so, it absorbs the required heat of vaporization from the chilled water, thus reducing the temperature of the water. The low pressure vapor is then drawn into the inlet of compressor 12 and the cycle is continually repeated. The chilled water is circulated through a distribution system to cooling coils for, for example, comfort air conditioning.

Portions of the chiller system 10 (e.g., cooler 18) may operate at a low pressure (e.g., less than atmosphere) which can cause non-condensables (e.g., ambient air) to be drawn into the chiller system 10. The non-condensables in the refrigerant flow of the chiller system 10 degrades performance of the chiller.

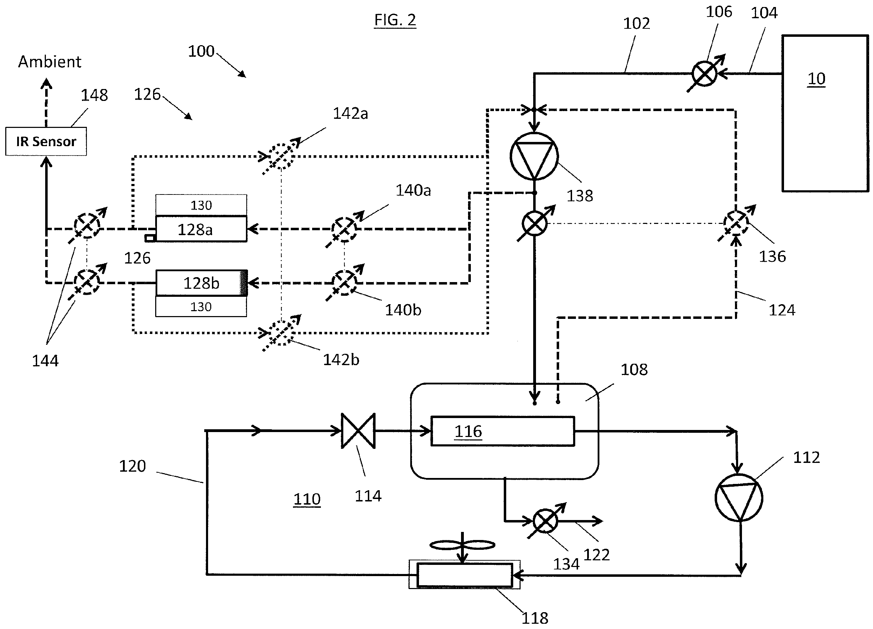

FIG. 2 depicts a purge system 100 fluidly connected to the chiller system 10, for removing non-condensables from the chiller system 10. Purge system 100 includes a purge input line 102 through which chiller refrigerant 104, containing non-condensables, flows from the chiller system 10 into the purge system 100. Flow of the chiller refrigerant 104 along the purge input line 102 is controlled by purge input valve 106. The purge input line 102 directs the chiller refrigerant 104 into a purge tank 108, which is one element of a purge vapor compression cycle 110, including a purge compressor 112, a purge expansion valve 114, a purge evaporator 116 that resides in the purge tank 108, and a purge condenser 118, which may be air cooled or water cooled. The purge vapor compression cycle utilizes a purge refrigerant flow 120, which may be the same refrigerant material as the chiller refrigerant 104, or alternatively may be a different refrigerant material. At the purge evaporator 116, the purge refrigerant flow 120 exchanges thermal energy with the chiller refrigerant 104, condenses at least a portion of the chiller refrigerant 104 to a liquid, with a lesser degree of non-condensables, which is directed back to chiller system 10 through purge output line 122.

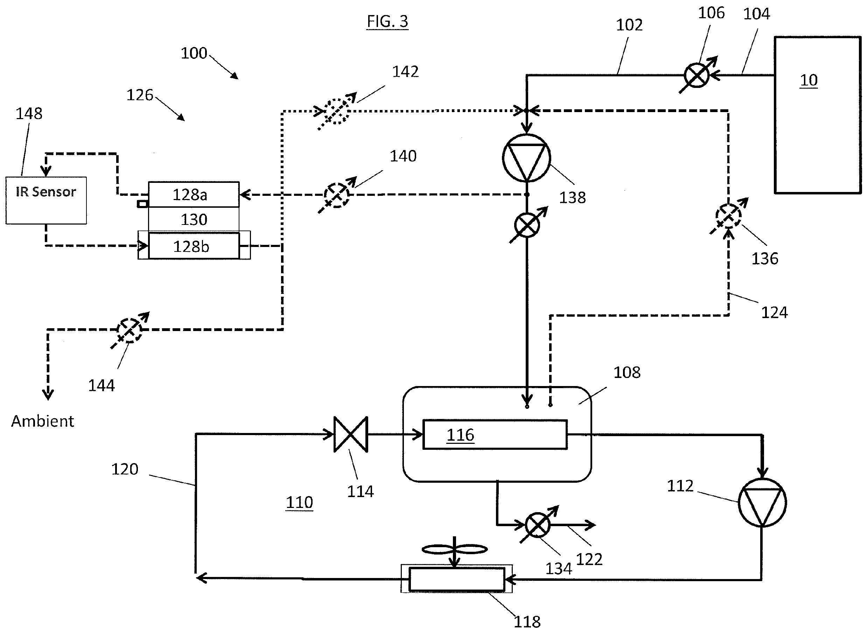

The remaining chiller refrigerant 104 with non-condensables is collected at the purge tank 108, which becomes pressurized by the increasing amount of chiller refrigerant 104 and non-condensables present in the purge tank 108. An evacuation line 124 connects the purge tank 108 to a regeneration system 126 arranged to remove the non-condensables from the chiller refrigerant 104 and recover chiller refrigerant 104 to be returned to the chiller system 10. The regeneration system 126 includes two or more carbon beds 128 fluidly connected to the evacuation line 124. In some purge systems, the carbon beds 128 are arranged in a fluidly parallel arrangement as shown in FIG. 2, which is outside of the scope of the claims, or alternatively as shown in FIG. 3, the carbon beds 128 may be arranged in a fluidly serial arrangement according to the invention.

Referring again to FIG. 2, each carbon bed 128 is in thermal communication with a heater 130 utilized to periodically regenerate the associated carbon bed 128 by heating the carbon bed 128 and direct the non-condensables collected at the carbon bed 128 to ambient 132. Multiple carbon beds 128 allow longer continuous operation of the regeneration system 126 and connected purge system 100 as will be explained in more detail below.

Referring to FIG. 2, when purge tank 108 reaches a selected pressure indicating buildup of chiller refrigerant 104 and non-condensables in the purge tank 108, purge input valve 106 and a purge outlet valve 134 are closed to isolate the purge system 106 and the regeneration system 126 from the chiller system 10. Evacuation valve 136 is opened and chiller refrigerant 104 and non-condensables move from the purge tank 108 to the regeneration system 126, either by pressure in the purge tank 108 or by regeneration compressor 138 or vacuum pump. Carbon bed input valves 140a and 140b are selectably opened to direct the chiller refrigerant 104 and non-condensables to a first carbon bed 128a or alternatively to a second carbon bed 128b. Similarly, carbon bed output valves 142a and 142b are opened. The chiller refrigerant 104 and non-condensables are flowed across the first carbon bed 128a or the second carbon bed 128b, where the carbon material present in the carbon bed 128 absorbs the refrigerant. The non-condensables are released to ambient via a vent valve 144, after flowing past an IR sensor 148.

When the refrigerant has fully adsorbed onto the carbon bed 128, the refrigerant will then begin to pass through the carbon bed 128 and flow by an IR sensor 148 to ambient via a vent valve 144 along with the non-condensables. The IR sensor 148 is utilized to sense for the presence of refrigerant in the vent flow. In the system of FIG. 2, if refrigerant is detected in the vent flow by the IR sensor 148, the vent valve 144 is closed, stopping the flow from the carbon bed 128. The carbon bed 128 is then regenerated utilizing heater 130 to release any refrigerant captured in the carbon bed 128. The refrigerant 104 released from the carbon bed 128 is flowed through the carbon bed output valve 142 to the purge tank 108, where it is returned to the chiller system 10 via the purge output line 122. Through the parallel arrangement of carbon beds 128a and 128b and the valving of the purge system 100, while, for example, first carbon bed 128a is being regenerated, the second carbon bed 128b may utilized normally for purge system 100 operations.

Illustrated in FIG. 3 is a purge system 100 according to the invention, in which charcoal beds 128a and 128b are arranged in series, with the IR sensor 148 located between carbon bed 128a and 128b. The embodiment of FIG. 3 operates much like the system of FIG. 2, except that during regeneration operation vent flow from the first carbon bed 128a, if refrigerant is detected by the IR sensor 148, is directed across the second carbon bed 128b, thus removing any refrigerant therefrom, prior to returning to the purge tank 108. This improves the efficiency of the purge system 100 operation by reducing an amount of non-condensables in the refrigerant 104 regenerated from the carbon bed 128a. In the embodiment of FIG. 3, a single heater 130 is utilized, located between carbon beds 128a and 128b, so either or both of the carbon beds 128 may be heated utilizing heater 130.

The purge system 100 with dual carbon beds 128 and IR sensor 148 results in a high rate of refrigerant recovery via operation of the purge system 100, while utilizing the IR sensor 148 to reduce refrigerant emissions to ambient. While the embodiments shown and described herein utilize two carbon beds 128, one skilled in the art will readily appreciate that in other embodiments three or more carbon beds 128 may be utilized to further increase operational efficiency of the purge system 100.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A purge system (100) for removing non-condensables from a chiller system (10), the purge system comprising:
a purge chamber (108);
a plurality of carbon beds (128a, 128b) fluidly connected to the purge chamber into which a flow of refrigerant and non-condensables is selectably directed from the purge chamber to remove the non-condensables therefrom;
a vent line fluidly connected to the plurality of carbon beds to dispose of the collected non-condensables;
a heater (130) operably connected to the plurality of carbon beds to selectably heat one or more of the carbon beds of the plurality of carbon beds to release refrigerant therefrom and direct the released refrigerant to the purge chamber; and
a sensor (148) to detect presence of refrigerant in the vent line;
wherein the sensor is positioned along a fluid path between a first carbon bed of the plurality of carbon beds and a second carbon bed of the plurality of carbon beds; and
wherein when the sensor detects the presence of refrigerant, flow is moved from the first carbon bed through the second carbon bed and to the purge chamber.

2. The purge system of claim 1 wherein the plurality of carbon beds are arranged in a fluidly parallel arrangement.

3. The purge system of claim 1, further comprising a plurality of heaters, each heater operably connected to a carbon bed of the plurality of carbon beds.

4. The purge system of claim 1, wherein the plurality of carbon beds are arranged in a fluidly serial arrangement.

5. The purge system of claim 1, further comprising a pumping element (138) to urge flow from the purge chamber to the plurality of carbon beds.

6. The purge system of claim 5, wherein the pumping element is one of a compressor or a vacuum pump.

7. The purge system of claim 1, further comprising a purge chamber outlet to selectably direct refrigerant from the purge chamber to the chiller system.

## Patentansprüche

1. Entlüftungssystem (100) zum Entfernen von nicht kondensierbaren Stoffen aus einem Kühlersystem (10), wobei das Entlüftungssystem Folgendes umfasst:
eine Entlüftungskammer (108);
eine Vielzahl von mit der Entlüftungskammer fluidverbundenen Kohlenstoffbetten (128a, 128b), in die ein Strom von Kältemittel und nicht kondensierbaren Stoffen selektiv aus der Entlüftungskammer geleitet wird, um die nicht kondensierbaren Stoffe daraus zu entfernen;
eine mit der Vielzahl von Kohlenstoffbetten fluidverbundene Entlüftungsleitung, um die gesammelten nicht kondensierbaren Stoffe zu entsorgen;
ein mit der Vielzahl von Kohlenstoffbetten wirkverbundenes Heizelement (130), um selektiv eines oder mehrere der Kohlenstoffbetten der Vielzahl von Kohlenstoffbetten zu erhitzen, um Kältemittel daraus freizusetzen und das freigesetzte Kältemittel in die Entlüftungskammer zu leiten; und
einen Sensor (148), um das Vorhandensein von Kältemittel in der Entlüftungsleitung zu erkennen;
wobei der Sensor entlang eines Fluidwegs zwischen einem ersten Kohlenstoffbett der Vielzahl von Kohlenstoffbetten und einem zweiten Kohlenstoffbett der Vielzahl von Kohlenstoffbetten positioniert ist; und
wobei, wenn der Sensor das Vorhandensein von Kältemittel erkennt, der Strom vom ersten Kohlenstoffbett durch das zweite Kohlenstoffbett und zur Entlüftungskammer geleitet wird.

2. Entlüftungssystem nach Anspruch 1, wobei die Vielzahl von Kohlenstoffbetten in einer fluidischen Parallelanordnung angeordnet ist.

3. Entlüftungssystem nach Anspruch 1, ferner umfassend eine Vielzahl von Heizelementen, wobei jedes Heizelement mit einem Kohlenstoffbett der Vielzahl von Kohlenstoffbetten wirkverbunden ist.

4. Entlüftungssystem nach Anspruch 1, wobei die Vielzahl von Kohlenstoffbetten in einer fluidischen Reihenanordnung angeordnet ist.

5. Entlüftungssystem nach Anspruch 1, ferner umfassend ein Pumpelement (138), um den Strom aus der Entlüftungskammer zu der Vielzahl von Kohlenstoffbetten zu befördern.

6. Entlüftungssystem nach Anspruch 5, wobei das Pumpelement eines von einem Kompressor oder einer Vakuumpumpe ist.

7. Entlüftungssystem nach Anspruch 1, ferner umfassend einen Entlüftungskammerauslass, um selektiv Kältemittel aus der Entlüftungskammer in das Kühlersystem zu leiten.

## Revendications

1. Système de purge (100) permettant d'éliminer les gaz non condensables d'un système de refroidisseur (10), ledit système de purge comprenant :
une chambre de purge (108) ;
une pluralité de lits de carbone (128a, 128b) fluidiquement reliés à la chambre de purge dans laquelle un flux de réfrigérant et de gaz non-condensables est dirigé de manière sélective depuis la chambre de purge afin d'éliminer les gaz non-condensables de celle-ci ;
une conduite dévent fluidiquement reliée à la pluralité de lits de carbone pour éliminer les gaz non-condensables collectés ;
un réchauffeur (130) relié de manière opérationnelle à la pluralité de lits de carbone pour chauffer de manière sélective l'un ou plusieurs des lits de carbone de la pluralité de lits de carbone afin d'en libérer le réfrigérant et de diriger le réfrigérant libéré vers la chambre de purge ; et
un capteur (148) pour détecter la présence de réfrigérant dans la conduite d'évent ;
dans lequel le capteur est positionné le long d'un trajet de fluide entre un premier lit de carbone de la pluralité de lits de carbone et un deuxième lit de carbone de la pluralité de lits de carbone ; et
dans lequel, lorsque le capteur détecte la présence de réfrigérant, le flux est transféré du premier lit de carbone, traverse le deuxième lit de carbone, puis est acheminé vers la chambre de purge.

2. Système de purge selon la revendication 1, dans lequel la pluralité de lits de carbone sont disposés en configuration fluidique parallèle.

3. Système de purge selon la revendication 1, comprenant également une pluralité de réchauffeurs, chaque réchauffeur étant raccordé de manière fonctionnelle à un lit de carbone de la pluralité de lits de carbone.

4. Système de purge selon la revendication 1; dans lequel, lorsque le capteur détecte la présence de réfrigérant, le flux est transféré du premier lit de carbone, traverse le deuxième lit de carbone, puis est acheminé vers la chambre de purge.

5. Système de purge selon la revendication 1, comprenant également un élément de pompage (138) pour pousser le flux depuis la chambre de purge vers la pluralité de lits de carbone.

6. Système de purge selon la revendication 5, dans lequel ledit élément de pompage est un compresseur ou une pompe à vide.

7. Système de purge selon la revendication 1, comprenant également une sortie de chambre de purge pour diriger de manière sélective le réfrigérant de la chambre de purge vers le système de refroidisseur.
